# EUROPEAN PATENT SPECIFICATION

(11) **EP 1 209 676 B1**
(45) Date of publication and mention of the grant of the patent: **15.02.2006**
(21) Application number: 01126501.4
(22) Date of filing: 12.11.2001
(51) Int. Cl.: G11B 19/04, H02J 7/00, G06F 11/00

(54) **Method of controlling disk writing operation based on battery remaining capacity**
Verfahren zur Steuerung des Plattenaufzeichnungsverfahrens basierend auf der restlichen Kapazität der Batterie
Méthode pour contrôler l'exécution d'écriture de disque basée sur la capacité restante de batterie

(30) Priority: 28.11.2000 KR 2000071379; 10.08.2001 KR 2001048359
(43) Date of publication of application: 29.05.2002
(73) Proprietor: LG ELECTRONICS INC., Seoul 150-010 (KR)
(72) Inventor: Seo, An Seong, Jeollabuk-Do, 570-030 (KR)
(74) Representative: Vossius & Partner

(56) References cited:
- EP-A- 0 819 999
- EP-A- 1 050 881
- EP-A- 1 152 411
- US-A- 4 636 905
- US-A- 4 689 698
- US-A- 5 602 805

## Description

The present invention relates to a method of controlling a disk writing operation based on battery remaining capacity. This method is applicable to a portable device such as notebook and disk drive which use a battery as a power source.

A notebook, whose dimension and weight is getting smaller and lighter, is widely used at present, and its electric energy is supplied from a battery as well as AC power line. However, because the battery capacity is limited a notebook can not be used for more than a few hours if its power is supplied from an equipped battery. In addition, a disk drive included in a notebook is driven at higher speed which requires higher power consumption, therefore, an electric energy supplying time of a battery equipped in a notebook is reduced remarkably.

Furthermore, because a high-speed disk drive equipped in a notebook is driven at a fixed maximum high speed whenever it is activated, a driving time to reach the fixed maximum speed is relatively long and driving current is relatively large. These factors exercise a bad effect upon extension of battery supplying time.

To resolve such problems, a new application with Publication no.10-2001-0029233 (Application No. 99-41946) was filed in Korea Industrial Property Office on September 30, 1999 in the name of LG Inc. with entitlement of "method and apparatus of driving a disk based on battery remaining capacity". The invention proposed in the application is to extend supplying time of a battery of limited capacity by adjusting disk speed inserted in a disk drive based on battery remaining capacity and which power source is used at present.

However, in the method proposed by the application with publication no.10-2001-0029233 (application No. 99-41946), a battery may be completely discharged while an disk inserted in a disk drive is being driven at a lower speed adjusted due to small remaining capacity of a battery. If a battery is completely discharged while an inserted disk is written, a writing operation is abnormally terminated.

At the abnormal termination of writing operation, information of a writing-terminated track is not written in Program Memory Area (PMA) reserved in a disk, so that the last recording position is not preserved, which makes it impossible to append data to the writing-terminated disk. In addition, because the writing-terminated disk has not information of the writing-terminated track, a session including the writing-terminated track can not be closed. Therefore, a writing-terminated disk containing an opened session can not be read by a reproduction-only disk drive such as a CD-ROM drive, either.

In EP-A-1 050 881 reflecting the nearest prior art a signal recording apparatus is disclosed which includes a battery voltage detecting circuit. When a record button is pressed a syscon compares an average voltage value with a threshold A which is set at a value that recording can be completely made. When the average voltage value is lower than the threshold A caution means gives a caution of remaining capacity insufficiency of the battery. In case the average voltage value is equal or larger than the threshold A the syscon starts recording. During the recording the syscon detects voltage values given from a battery voltage detector circuit and determines based on thresholds B and C whether recoding is possible to continue or not.

EP-A-1 152 411 (prior art under Article 54(3) EPC,) discloses a recording/playback apparatus and a personal computer wherein a system operation corresponding to the remaining battery level of the recording/playback apparatus is controlled. The range of time for which an operation can be continued corresponding to a remaining battery level is divided into four stages, wherein boundary values 1-3 form boundaries between the stages.

US-A-5 602 805 discloses a magneto-optical disk drive apparatus which sends a notice of inhibition of writing write data into a magneto-optical disk to a host computer when a volume of electric charge in a secondary battery has not reached a predetermined level.

In EP-A-0 819 999 a dynamic hibernation time apparatus monitors and ensures that battery packs in a computer system have sufficient energy capacity to sustain a proper saving of a hibernation file into a hard drive disk.

It is an object of the present invention to provide a method of controlling a disk writing operation based on battery remaining capacity, which guarantees normal completion of a disk writing operation all the times by determining whether to end a disk writing operation in advance after checking a remaining capacity of a battery, equipped in a notebook or a portable disk drive, while recording data to a writable disk or calculating expected suppliable time of a battery before recordind data. This object of the present invention is achieved by the methods as defined in the claims.

A method of controlling disk writing operation based on a battery remaining capacity in accordance with the present invention, detects a current battery remaining capacity; compares the detected battery remaining capacity with a reference capacity required for conducting normal completion of writing operation; and conducts data writing or completion of writing operation based on the comparison result, wherein said completion of writing operation includes writing operation of management information on data written before completion of writing operation, wherein said management information is to be written in a program memory area (PMA) allocated in a disk recording medium.

Another method of controlling disk writing operation based on a battery remaining capacity in accordance with the present invention, estimates a suppliable capacity of a battery; determines on whether it is possible to record an amount of data requested to be written from a user to a disk recording medium with the estimated suppliable capacity; and controls disk writing operation according to the determination, wherein said completion of writing operation includes writing operation of management information on data written before completion of writing operation, wherein said management information is to be written in a program memory area allocated in a disc recording medium.

### BRIEF DESCRIPTION OF THE DRAWINGS

The accompanying drawings, which are included to provide a further understanding of the invention, illustrate the preferred embodiments of the invention, and together with the description, serve to explain the principles of the present invention.

In the drawings:
Fig. 1 shows a block diagram of a notebook, which a method of controlling a disk writing operation based on battery remaining capacity in accordance with the present invention is applied to, and a disk drive connected to the notebook through ATAPI interface;
Fig. 2 is a flow diagram embodying a method of controlling a disk writing operation according to the present invention;
Fig. 3 shows another block diagram of a notebook equipped with a disk drive, which a method of controlling a disk writing operation based on battery remaining capacity in accordance with the present invention is applied to;
Fig. 4 is a flow diagram embodying another method of controlling a disk writing operation according to the present invention;
Fig. 5 shows another block diagram of a notebook equipped with a disk drive, which another method of controlling a disk writing operation based on battery remaining capacity in accordance with the present invention is applied to.

### DETAILED DESCRIPTION OF THE PREFFERRED EMBODIMENT

In order that the invention may be fully understood, a preferred embodiment thereof will now be described with reference to the accompanying drawings.

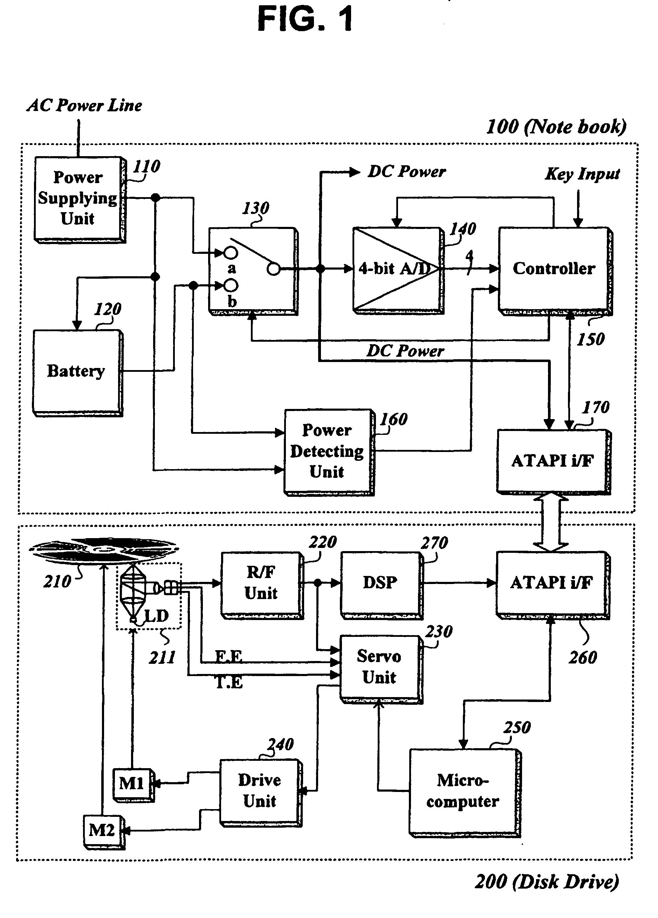

Fig. 1 shows a block diagram of a notebook, which a method of controlling a disk writing operation based on battery remaining capacity in accordance with the present invention is applied to, and a disk drive connected to the notebook through ATAPI interface.

The notebook 100 shown in Fig. 1 comprises a power supplying unit 110 rectifying AC power fed by an AC power line to DC and supplying the rectified DC power to both all elements of the notebook 100 and the disk drive 200; a battery 120 charging inner cells with electric energy of the DC power and discharging electric energy, if needed; a power switch 130 selecting one among available power sources; an A/D converter 140 digitizing an analog input signal; a power detecting unit 160 detecting whether or not a power is supplied from an external AC power line; a controller 150 detecting based on the digitized data from the A/D converter 140 how much the battery 120 has been charged; and an ATAPI interface 170 communicating data with the disk drive 200 in accordance with ATAPI protocol.

The disk drive 200 shown in Fig. 1 comprises an optical pickup 211 reading recorded data from a surface of an inserted disk 210; a driving unit 240 driving motors M1 and M2 for moving and rotating the pickup 211 and the disk 210, respectively; an R/F unit 220 equalizing and shaping RF signals detected by the pickup 211 to produce binary signals; a digital signal processing unit 270 processing the binary signals from the R/F unit 220 to restore original digital data; a servo unit 230 controlling the driving unit 240 and an actuator of the pickup 211; an ATAPI interface 260; and a microcomputer 250 determining disk speed by interpreting packet commands through the ATAPI interface 260 and supervising the driving unit 240 to rotate the inserted disk 210 at the determined speed.

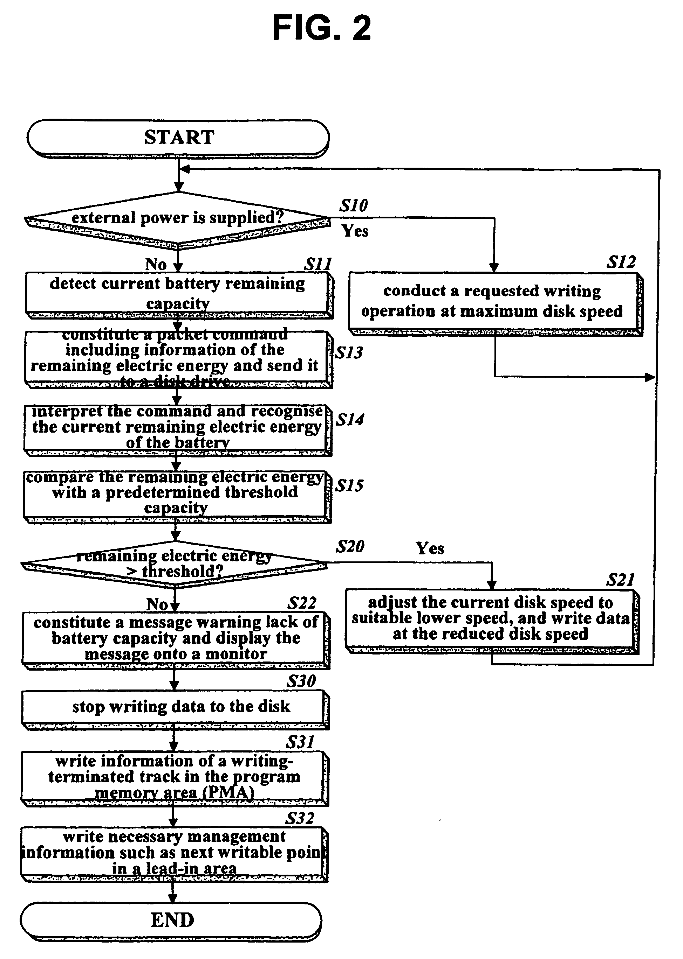

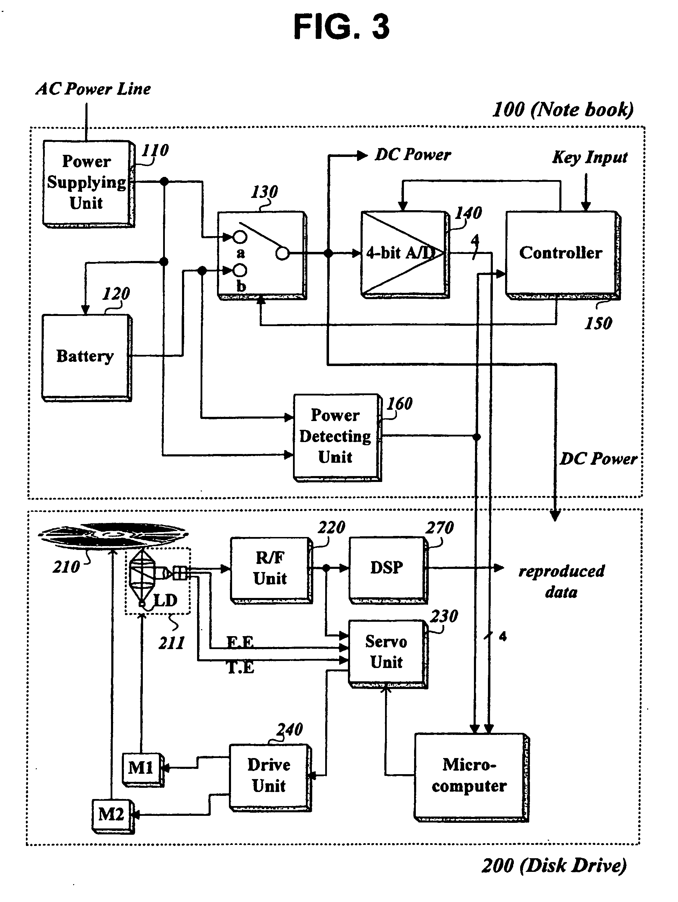

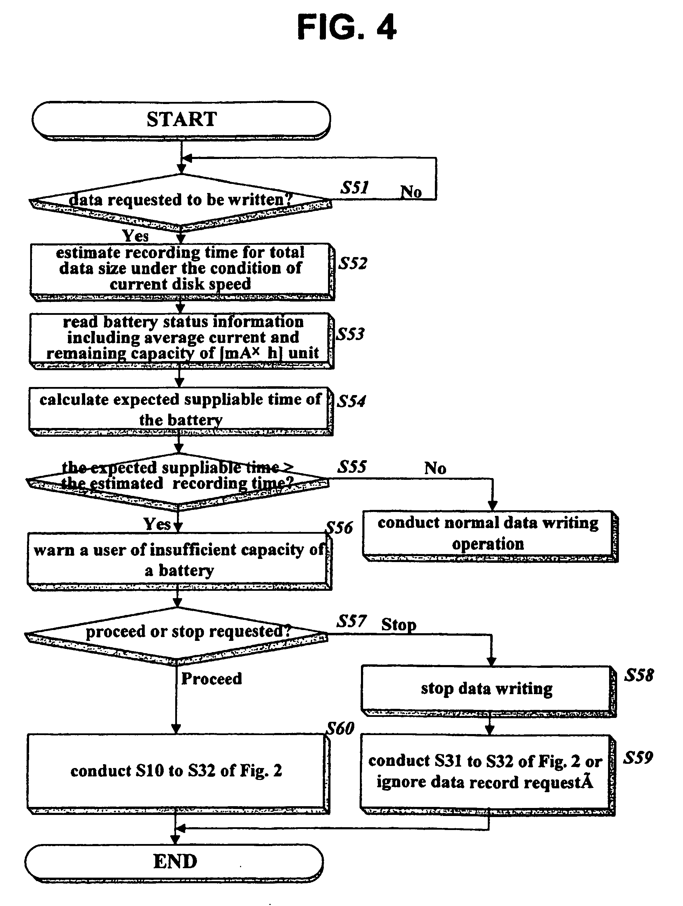

Fig. 2 is a flow diagram embodying a method of controlling a disk writing operation according to the present invention.

The procedures conducted in the disk drive equipped notebook configured as Fig. 1 are explained in detail hereinafter.

An electric energy supplied from an external AC power source is applied to the power supplying unit 110 and is rectified to DC power. The battery 120 charges internal cells with electric energy supplied from the DC power.

While the battery 120 is being charged, the controller 150 checks whether an external power is supplied or not (S10) based on the output value of the power detecting unit 160. If the output value indicates that an external power is being supplied, the controller 150 commands the switch 130 to select a power input of its 'a' terminal so that the DC power supplied from an external power source may be fed to all elements of the notebook 100 and the disk drive 200.

In the condition that an external AC power is supplied, if data writing to the disk 210 is requested, the microcomputer 250 of the disk drive 200 commands the driving unit 240 to apply a driving voltage corresponding to a predetermined maximum speed to the spindle motor M2. After the disk speed has reached maximum, the microcomputer 250 conducts the requested writing operation (S12) to the disk 210 rotating at the highest speed.

If an external AC power is not connected to the notebook 100 so that the DC power is not supplied from the power supplying unit 110, the battery 120 discharges to supply necessary electric energy. Then, the controller 150 recognizes from the output value of the power detecting unit 160 that there is no external AC power, and commands the switch 130 to select 'b' terminal instead of 'a' as its input source.

Due to 'b' terminal selection of the switch 130, the electric energy charged in the battery 120 is supplied to all elements of the notebook 100 as well as the disk drive 200. While the battery 120 supplies necessary electric energy, the controller 150 checks the digitized value from the A/C converter 140 (S11) to know how much electric energy remains in the battery 120. The digitized value represents an amount of remaining electric energy of the battery 120, for example, the digitized value of '1000b' means that remaining capacity is a half (50%) of full capacity. The relation between the digitized value and remaining capacity depends upon a DC offset biased to the A/D converter 140.

The controller 150 constitutes a packet command including information of the remaining capacity in accordance with ATAPI protocol, and then sends the constituted packet command to the remote ATAPI interface 260 through the local ATAPI interface 170 (S13). The ATAPI interface 260 of the disk drive 200 delivers the received packet command to the microcomputer 250 which recognizes the current remaining electric energy of the battery 120 equipped in the notebook 100 (S14) by interpreting the packet command.

Then, the microcomputer 250 compares the current remaining capacity with a predetermined threshold capacity (S15), for example, 6.25% of full, which can guarantees normal completion of writing operation, and it controls current writing operation based on the comparison results. The threshold capacity has been determined to be not less than minimum capacity required for writing completion in the middle of data writing.

If the comparison indicates that the current remaining capacity is larger than the threshold (S20), the microcomputer 250 adjusts the current disk speed to suitable lower speed, if needed, to extend a writing time and conducts data writing operation at the reduced disk speed (S21). This speed reduction is conducted if the current remaining capacity is lower than a half of full charged energy.

While data is being written at the adjusted speed, the microcomputer 250 continues to check the current remaining capacity sent from the controller 150. While checking the remaining capacity, if the remaining capacity falls down below the threshold the microcomputer 250 starts to complete current writing operation regardless of whether all of data are written or not.

To complete writing operation in the middle of data writing, the microcomputer 250 stops writing data to the disk 210 first (S30), and writes information of a writing-terminated track in the PMA for storing temporary management information (S31). Preferably, the microcomputer 250 closes a session including the writing-terminated track to make the disk 210 accessible even at a reproduction-only disk drive. In the session closing operation, the microcomputer 250 writes program area ending marks, e.g., 2Hz pulses behind the writing-terminated track. The 2Hz pulse written zone forms a lead-out area. The microcomputer 250 also writes management information containing next writable point, which is ending point of the writing-terminated track, in a lead-in area reserved at the fore part of the session including the writing-terminated track (S32).

The threshold capacity is also memorized in the controller 150 so that the controller 150 constitutes a warning message, e.g., "You should complete current writing operation because of lack of battery remaining capacity !" and displays the message onto a monitor (S22) before delivering information of current remaining capacity to the disk drive 200, if the current remaining capacity is below the threshold. If a user confirms the warning message, the controller 150 transmits the remaining capacity detected lower than the threshold to the microcomputer 250 of the disk drive 200. As a result, the aforementioned operation of writing completion is sequentially conducted by the microcomputer 250.

A method of controlling disk writing operation based on battery remaining capacity in accordance with the present invention is also applicable to an independent portable disk drive besides the disk drive-equipped notebook depicted in Fig. 1. In an independent portable disk drive, the ATAPI interfaces 170 and 260 are removed and the controller 150 and the microcomputer 250 are integrated into a single element. An independent portable disk drive may have a small LCD panel as a displaying means.

Fig. 3 shows another block diagram of a notebook equipped with a disk drive, which a method of controlling a disk writing operation based on battery remaining capacity in accordance with the present invention is applied to;

In the structure of Fig. 3, information on current battery remaining capacity and which power source is being supplied is delivered to the disk drive 200 directly through additional signal lines instead of the ATAPI interfaces 170 and 260 equipped in the notebook 100 and the disk drive 200, respectively. The other elements of Fig. 3 are same with Fig. 1.

A method of controlling disk writing operation conducted in the disk drive equipped notebook depicted in of Fig. 3 is as follows. The output value of the power detecting unit 160 and the digitized value of the A/D converter 140 are directly delivered to the microcomputer 250 of the disk drive 200, then, the microcomputer 250 knows from the output value of the power detecting unit 160 whether an external power is supplied or not. If an external power is supplied, the microcomputer 250 drives the disk 210 to rotate at maximum speed and writes data to the disk 210, otherwise, it recognizes current battery remaining capacity in proportion to the digitized value of the A/D converter 140, compares the recognized capacity with the predetermined threshold, and conducts adjustment of disk speed and operation of writing completion based on the comparison result, as explained above.

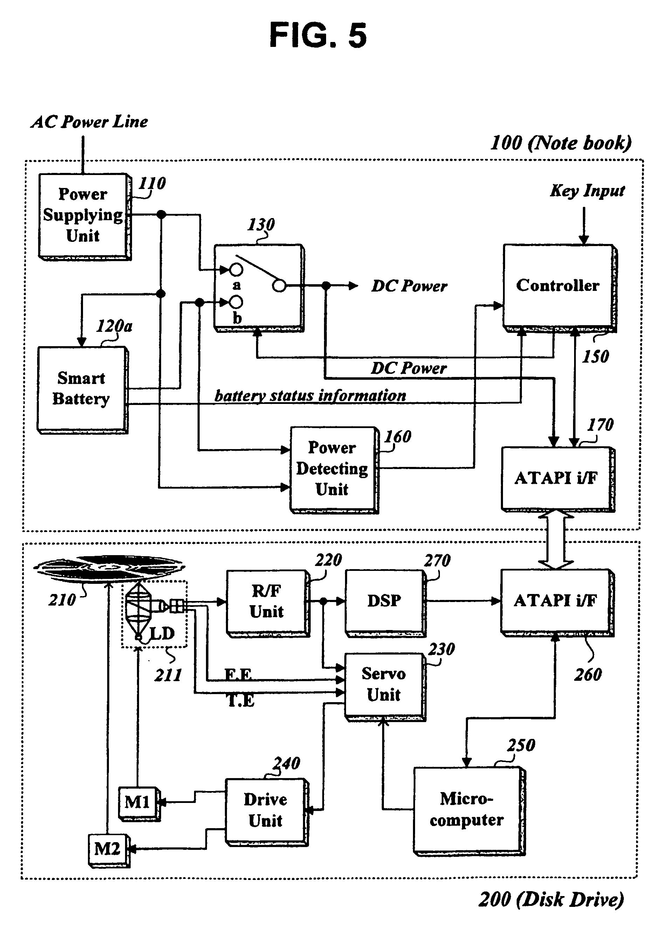

Fig. 4 is a flow diagram embodying another method of controlling a disk writing operation according to the present invention. The method depicted in Fig. 4 is applicable to a smart battery (120a) equipped notebook 100 including disk drive 200 whose block diagram is shown in Fig. 5. The smart battery 120a can provide various information on electric energy charged in internal battery cells for the controller 150 through a connected bus.

The procedures of Fig. 4 conducted in the smart battery equipped notebook configured as Fig. 5 are explained in detail hereinafter.

If data writing is requested to the controller 150 of the notebook 100 from a user (S51), the controller 150 measures the size of data to write and estimates total recording time for that size under the condition of current disk speed of the disk drive 200 (S52). In addition, the controller 150 receives information on average current and remaining capacity of [mA·h] unit (S53), which is provided from the smart battery 120a periodically, e.g., every 15 seconds, and it calculates expected suppliable time of the smart battery 120a through dividing the remaining capacity by the average current (S54).

To estimate the expected suppliable time more exactly, before the calculation, the controller 150 drives the inserted disk to rotate at maximum speed and writes some data to the disk for a while. Due to this trial writing, the current supplied from the smart battery 120a is increased, namely, a current required for rotating the disk is reflected in the average current information provided from the smart battery 120a, therefore, the expected suppliable time obtained from dividing the remaining capacity by the average current becomes much more exact.

The controller 150 compares the expected suppliable time with the estimated total recording time (S55), and warns a user of insufficient capacity of a battery (S56) through outputting message like "It is probably impossible to record all data with current battery remaining capacity, nevertheless, are you sure to proceed to record?", if the expected suppliable time is shorter than the estimated recording time. After warning, the controller 150 waits for a user's response (S57).

If a user requests record stop, the controller 150 stops writing and conducts the operation of writing completion (S58) as in the aforementioned steps S30 to S32 if data writing is proceeding, or ignores the request of data record if it has not started data writing (S59) .

Despite the above warning message, if a user still wants data record (S57), the steps S10 to S20 of checking current battery remaining capacity, the step S21 of adjusting disk writing speed based on the battery remaining capacity, and the steps S22 to S32 of determining whether to stop writing operation and completing current writing operation are conducted as in the embodiment of Fig. 2. Therefore, in the middle of writing data, disk writing operation can be normally completed (S60) in spite of lack of battery remaining capacity.

The above-explained method of controlling disk writing operation according to the present invention, can prevent disk damage caused from abnormal writing termination due to complete discharge of a battery in a notebook or a portable disk drive.

The present embodiments are to be considered in all respects as illustrative and not restrictive, the scope of the invention being indicated by the appended claims rather than by the foregoing description.

## Claims

1. A method of controlling disk writing operation based on a battery remaining capacity in a data recording apparatus equipped with a battery, comprising the steps of:
(a) detecting a current battery remaining capacity (S11);
(b) comparing the detected battery remaining capacity with a reference capacity required for conducting normal completion of writing operation (S15); and
(c) conducting data writing or completion of writing operation based on the comparison result (S30, S31, S32) wherein said completion of writing operation includes writing operation of management information on data Written before completion of writing operation, and wherein said management information is to be written in a program memory area (PMA) allocated in a disk recording medium.

2. The method set forth in claim 1, wherein said management information includes information to be written in lead-in area allocated before written data or in lead-out area allocated after the written data (S32).

3. A method of controlling disk writing operation based on a battery remaining capacity in a data recording apparatus equipped with a battery, comprising the steps of:
(a) estimating a suppliable capacity of the battery (S51, S52, S53, S54);
(b) determining on whether it is possible to record an amount of data requested to be written from a user to a disk recording medium with the estimated suppliable capacity (S55), and
(c) controlling disk writing operation according to the determination (S56, S57, S59, S60), wherein said completion of writing operation includes writing operation of management information on data written before completion of writing operation (S59, S32) and wherein said management information is to be written in a program memory area allocated in said disc recording medium.

4. The method set forth in claim 3, wherein in said suppliable capacity is a suppliable time calculated based on average current and charged electric energy expressed in current x time [A·t]

5. The method set forth in claim 4, wherein said step (b) calculates an expected record time required for writing the amount of data requested to be written, and checks whether or not the calculated expected record time exceeds the calculated suppliable time.

6. The method set forth in any of claims 3 to 5, wherein said step (c) outputs a message asking a user whether to proceed data writing (S56), and controls disk writing operation based on a response to the outputted message from the user (S57).

7. The method set forth in any of claims 3 to 6, wherein said step (c) comprises the steps of:
(c1) detecting a current battery remaining capacity;
(c2) comparing the detected battery remaining capacity with a reference capacity required for conducting normal completion of writing operation; and
(c3) conducting data writing or completion of writing operation based on the comparison result.

8. The method set forth in any of claims 3 to 7, wherein said management information includes information to be written in lead-in area allocated before written data or in lead-out area allocated after the written data.

## Patentansprüche

1. Verfahren zum Steuern einer Plattenschreiboperation beruhend auf einer restlichen Batteriekapazität in einer Datenaufzeichnungsvorrichtung, die mit einer Batterie ausgestattet ist, das die Schritte aufweist:
(a) Erfassen einer gegenwärtigen restlichen Batteriekapazität (S11);
(b) Vergleichen der erfaßten restlichen Batteriekapazität mit einer Referenzkapazität, die zur Durchführung einer normalen Vollendung einer Schreiboperation (S15) erforderlich ist; und
(c) Durchführen des Datenschreibens oder der Vollendung der Schreiboperation beruhend auf dem Vergleichsergebnis (S30, S31, S32), wobei die Vollendung der Schreiboperation eine Schreiboperation von Verwaltungsinformationen auf Daten aufweist, die vor der Vollendung der Schreiboperation geschrieben wurden, und wobei die Verwaltungsinformationen in einen Programmspeicherbereich (PMA) geschrieben werden, der in einem Plattenaufzeichnungsmedium reserviert ist.

2. Verfahren nach Anspruch 1, wobei die Verwaltungsinformationen Informationen aufweisen, die in einen Anfangsbereich, der vor geschriebenen Daten reserviert ist, oder in einen Endbereich geschrieben werden, der nach geschriebenen Daten (S32) reserviert ist.

3. Verfahren zum Steuern einer Plattenschreiboperation beruhend auf einer restlichen Batteriekapazität in einer Datenaufzeichnungsvorrichtung, die mit einer Batterie ausgestattet ist, das die Schritte aufweist:
(a) Berechnen einer lieferbaren Kapazität der Batterie (S51, S52, S53, S54);
(b) Feststellen, ob es möglich ist, eine vom Benutzer angeforderte Datenmenge, die geschrieben werden soll, mit der berechneten lieferbaren Kapazität auf ein Plattenaufzeichnungsmedium aufzuzeichnen (S55); und
(c) Steuern der Plattenschreiboperation gemäß der Feststellung (S56, S57, S59, S60), wobei die Vollendung der Schreiboperation eine Schreiboperation von Verwaltungsinformationen auf Daten aufweist, die vor der Vollendung der Schreiboperation (S59, S32) geschrieben wurden, und wobei die Verwaltungsinformationen in einen Programmspeicherbereich geschrieben werden sollen, der in dem Plattenaufzeichnungsmedium reserviert ist.

4. Verfahren nach Anspruch 3, wobei in der lieferbaren Kapazität eine lieferbare Zeit enthalten ist, die beruhend auf dem durchschnittlichen Strom und der geladenen elektrischen Energie berechnet wird, die als Strom x Zeit [A·t] ausgedrückt wird.

5. Verfahren nach Anspruch 4, wobei der Schritt (b) eine erwartete Aufzeichnungszeit berechnet, die zum Schreiben der angeforderten Datenmenge erforderlich ist, die geschrieben werden soll, und prüft, ob die berechnete erwartete Aufzeichnungszeit die berechnete lieferbare zeit überschreitet oder nicht.

6. Verfahren nach einem der Ansprüche 3 bis 5, wobei der Schritt (c) eine Meldung ausgibt, die einen Benutzer fragt, ob das Datenschreiben (S56) fortgesetzt werden soll, und die Plattenschreiboperation beruhend auf einer Antwort vom Benutzer (S57) auf die ausgegebene Meldung steuert.

7. Verfahren nach einem der Ansprüche 3 bis 6, wobei der Schritt (c) die Schritte aufweist:
(c1) Erfassen einer gegenwärtigen restlichen Batteriekapazität;
(c2) Vergleichen der erfaßten restlichen Batteriekapazität mit einer Referenzkapazität, die zur Durchführung einer normalen Vollendung einer Schreiboperation erforderlich ist; und
(c3) Durchführen des Datenschreibens oder der Vollendung der Schreiboperation beruhend auf dem Vergleichsergebnis.

8. Verfahren nach einem der Ansprüche 3 bis 7, wobei die Verwaltungsinformationen Informationen aufweisen, die in einen Anfangsbereich, der vor geschriebenen Daten reserviert ist, oder in einen Endbereich geschrieben werden sollen, der nach geschriebenen Daten reserviert ist.

## Revendications

1. Procédé pour contrôler l'opération d'écriture de disque en fonction d'une capacité restante de batterie dans un appareil d'enregistrement de données équipé d'une batterie, comprenant les étapes consistant à :
(a) détecter une capacité restante actuelle de batterie (S11) ;
(b) comparer la capacité restante de batterie détectée avec une capacité de référence requise pour effectuer l'achèvement normale de l'opération d'écriture (S15) ; et
(c) conduire l'opération d'écriture de données ou l'achèvement de l'opération d'écriture en fonction du résultat de comparaison (S30, S31, S32), dans lequel ledit achèvement de l'opération d'écriture comprend l'opération d'écriture des informations de gestion sur les données écrites avant l'exécution de l'opération d'écriture, dans lequel lesdites informations de gestion doivent être écrites dans une zone de mémoire de programme (PMA) allouée dans un support d'enregistrement de disque.

2. Procédé selon la revendication 1, dans lequel lesdites informations de gestion comprennent les informations à écrire dans la zone d'entrée allouée avant les données écrites ou dans une zone de sortie allouée après les données écrites (S32).

3. Procédé pour contrôler l'opération d'écriture de disque en fonction d'une capacité restante de batterie dans un appareil d'enregistrement de données équipé d'une batterie, comprenant les étapes consistant à :
(a) estimer une capacité pouvant être fournie par la batterie (S51, S52, S53, S54) ;
(b) déterminer s'il est possible d'enregistrer une quantité de données dont l'écriture a été demandée par un utilisateur sur un support d'enregistrement de disque avec la capacité fournissable estimée (S55) ; et
(c) contrôler l'opération d'écriture de disque selon la détermination (S56, S57, S59, S60), dans lequel ledit achèvement de l'opération d'écriture comprend l'opération d'écriture des informations de gestion sur les données écrites avant l'achèvement de l'opération d'écriture (S59, S32) et dans lequel lesdites informations de gestion doivent être écrites dans une zone de mémoire de programme allouée dans le support d'enregistrement de disque.

4. Procédé selon la revendication 3, dans lequel dans ladite capacité pouvant être fournie, se trouve un temps pouvant être fourni, calculé en fonction de courant moyen et d'une énergie électrique chargée exprimé en courant x temps [A.t].

5. Procédé selon la revendication 4, dans lequel ladite étape (b) calcule un temps d'enregistrement attendu, nécessaire pour écrire la quantité de données devant être écrite, et elle vérifie si le temps d'enregistrement attendu calculé dépasse ou non le temps fournissable calculé.

6. Procédé selon l'une quelconque des revendications 3 à 5, dans lequel ladite étape (c) émet un message demandant à l'utilisateur s'il convient de poursuivre l'écriture de données (S56) et contrôle l'opération d'écriture de données en fonction d'une réponse au message émis par l'utilisateur (S57).

7. Procédé selon l'une quelconque des revendications 3 à 6, dans lequel ladite étape (c) comprend l'étape consistant à :
(c1) détecter une capacité restante actuelle de batterie ;
(c2) comparer la capacité restante de batterie détectée avec une capacité de référence requise pour effectuer l'achèvement normal de l'opération d'écriture ; et
(c3) effectuer l'écriture de données ou l'achèvement de l'opération d'écriture en fonction du résultat de comparaison.

8. Procédé selon l'une quelconque des revendications 3 à 7, dans lequel lesdites informations de gestion comprennent les informations à écrire dans la zone d'entrée affectée avant les données écrites ou dans la zone de sortie affectée après les données écrites.
